Europäisches Patentamt

(19) European Patent Office

Office européen des brevets

(11) Publication number: **0 074 202**
**A2**

(12) # EUROPEAN PATENT APPLICATION

(21) Application number: **82304409.4**

(22) Date of filing: **20.08.82**

(51) Int. Cl.³: **F 02 B 31/00**
**F 02 M 29/06**

(30) Priority: **28.08.81 GB 8126336**

(43) Date of publication of application:
**16.03.83 Bulletin 83/11**

(84) Designated Contracting States:
**AT DE FR IT SE**

(71) Applicant: **RICARDO CONSULTING ENGINEERS**
**PUBLIC LIMITED COMPANY**
**Bridge Works Shoreham-by-Sea**
**West Sussex BN4 5FG(GB)**

(72) Inventor: **Ball, William Frederick**
**Woodleight Maudlyn Parkway**
**Bramber Steyning Sussex BN4 3PT(GB)**

(74) Representative: **Jennings, Nigel Robin et al,**
**KILBURN & STRODE 30 John Street**
**London WC1N 2DD(GB)**

(54) **Inlet air swirl control means for I.C. engines.**

(57) Inlet swirl control means for I.C. engines includes, for each inlet port (12, 12') of an engine, a movable insert sleeve (35, 35') slidingly mounted in the inlet passage (13, 13') of the port as a liner for the passage, the or each insert sleeve having a profiled tongue (37, 38') at its inner end which projects to a variable extent into the bowl (14, 14') of the port. The disposition and degree of protrusion of each tongue into its associated inlet port bowl controls the degree of swirl generated in the associated cylinder. Simultaneous adjustment of the dispositions of the protruding tongues (37, 37') of all the insert sleeves is carried out automatically during the running of the engine in response to variations in engine operating conditions such as engine speed and load. Such adjustment is effected by moving each insert linearly and/or rotating it in its associated inlet passage.

FIG. 1.

Croydon Printing Company Ltd.

## INLET AIR SWIRL CONTROL MEANS FOR I.C. ENGINES

This invention relates to internal combustion engines of the reciprocating-piston type, the or each cylinder of which has one or more inlet ports of either "helical" or "directed" type as hereinbefore defined, the or each inlet port being provided with an inlet valve of poppet type, there being a movably-mounted insert provided in the inlet passage of the or each inlet port, the insert having a deflector vane or tongue portion at its inner end which, in use, protrudes into the bowl of the port. The invention is particularly although not exclusively applicable to direct-injection (open chamber) compression-ignition engines, although it can also be employed in other types of reciprocating-piston engine, for example in certain known types of stratified-charge petrol engine.

The invention is concerned with controlling the inlet air direction as it enters each engine cylinder through the port or ports associated with that cylinder and the degree of swirl generated in the combustible fuel/air mixture in the combustion chamber of each cylinder by the intake air in response to changes in engine operating conditions during the running of the engine.

Considering, for example, direct-injection diesel engines having combustion chambers of circular plan formed centrally in the piston crown, good combustion is obtained using an approximately centrally-disposed injector in the cylinder head, the injector nozzle producing multiple small-diameter fuel sprays matched to the degree of air swirl generated in the air charge drawn into the combustion space. The smaller the engine the fewer the number of sprays per nozzle, the determining factors being the high fuel velocity through the spray holes required to produce adequate fuel atomisation during the injection period, and the machining difficulties and risk of blockage in service associated with very small spray holes. A practical compromise is four spray holes per nozzle for engines of automobile size.

The smaller the number of injector nozzle sprays, the greater the degree of swirl required to be generated within the cylinder by the intake air for efficient combustion.

In engines of the type with which the present invention is concerned, having poppet valves, the swirl within the cylinder is generated by the shape and disposition of the inlet ports, which in one form are directed in such a way that the air enters the cylinder tangentially at as large a radius of action as possible, and at a shallow angle so that a shallow spiral rotation of the air charge forms in the cylinder. Such inlet ports are referred to as "directed" inlet ports.

Alternatively a vortex chamber may be provided in the inlet port immediately above the back of the inlet valve so that the incoming air rotates within the vortex chamber about the valve axis as it moves downwardly towards the entrance to the cylinder combustion space. In such arrangements, referred to as "helical" inlet ports, the air moves in a helical path within the port and issues from the port into the cylinder at a significant radius from the cylinder bore axis, so that a substantial tangential air velocity is created within the cylinder causing swirl about the cylinder axis, on which is superimposed the vortex motion created by the vortex chamber within the inlet port.

It is to be understood that in this specification the term "inlet port" is used, as is now customary, to refer to the complete tract of the inlet passageway in the cylinder head extending from the junction of the cylinder head with the inlet manifold as far as the valve seating of the inlet poppet valve. The inlet port comprises an inlet passage leading from the junction with the inlet manifold and communicating at its downstream end with an inverted bowl around whose open lower end the valve seating is formed, the poppet valve stem extending down through the bowl from a valve guide in the upper part of the bowl. Here the terms "upper" and "lower" relate to the usual disposition of the inlet port in which it opens downwardly into the cylinder, but the specification and the scope of the invention are not to be interpreted as being limited to such downwardly-opening dispositions.

Engines with directed inlet ports and likewise engines with helical inlet ports both require a precisely-determined degree of swirl in each combustion chamber in order to achieve efficient combustion. If the degree of swirl differs in different cylinders of an engine, then combustion in some cylinders may not be optimum, and fuel consumption and low exhaust emission capability will be impaired.

Our British Patent Specification No. 1600888 discloses the use of an insert sleeve fixed in a straight downstream end portion of the inlet passage of each inlet port of the "helical" type, the sleeve having a profiled downstream end portion which projects as a tongue into the interior of the bowl. The shape, location and degree of projection of the sleeve tongue into the bowl affects the degree of swirl in the bowl and the way in which the inlet air passes the valve into the cylinder, so that by securing each sleeve in a suitable adjusted position when a multi-cylinder engine is being initially assembled, the degree of swirl produced in each cylinder can be trimmed and preset to a common predetermined value notwithstanding minor dimensional differences between different ports and in different branches of the inlet manifold produced in production.

Our British Patent Specification No. 2056553 A describes a corresponding arrangement of inwardly-projecting insert, e.g. a tubular sleeve, used in a "directed" inlet port, in which linear or rotary pre-adjustment of the position of the tongue of the insert projecting into the bowl is proposed as a means for equalising the swirl between the different cylinders.

It is an experimentally-determined fact that in direct-injection diesel engines a greater degree of swirl is required in the cylinders for good combustion at low engine speeds than is required at high speeds. Since a pressure drop is required along the length of the inlet port tract and across the inlet valve to supply the energy needed to produce swirl, there is some loss of volumetric efficiency which worsens as engine speed increases.

Accordingly it is an object of the present invention to provide an engine in which the above disadvantage can be substantially eliminated and the degree of swirl varied in accordance with an operating parameter of the engine to maximise its efficiency.

The present invention in its broadest concept comprises the provision of a movably-mounted insert in the inlet passage of the or each inlet port, whether of "helical" or "directed" type, the insert being in sliding contact with the interior wall of the inlet passage for longitudinal and/or circumferential sliding movement relative thereto, and having a deflector vane or tongue portion at its inner end which, in use, protrudes into the bowl of the port, and the engine having means for moving the insert during the running of the engine so as to adjust the disposition in the bowl of the port of the vane or tongue portion and hence to control the degree of swirl produced by that port in the associated cylinder during the running of the engine.

The adjustment of such a movably-mounted insert is preferably performed automatically during the running of the engine in response to changes in the engine operating conditions, for example changes in engine speed and/or load, whereby the degree of swirl can be optimised to suit the prevailing operating conditions.

Thus in the engine of the present invention, the rate of rise in the degree of swirl may be reduced, e.g. to zero or to negative values, during an increase in engine speed, which will reduce the engine suction losses and lead to an increase in maximum power and a reduction in specific fuel consumption at higher engine speeds.

Thus one form of the present invention comprises an I.C. engine of the reciprocating-piston type having one or more inlet ports of either "helical" or "directed" type as hereinbefore defined, there being mounted in the inlet passage of the or each inlet port a movable insert in the form of a liner sleeve which has at its inner end a tongue portion which is adapted to project inwardly into the bowl of the port, the insert sleeve being in slidable engagement with the internal wall of the passage for sliding movement either linearly along the length of the passage or angularly around the internal circumference of the passage or with a combination of said linear and angular sliding movements, the engine also having an operating mechanism operable during the running of the engine to move the insert sleeve of the or each inlet port linearly and/or angularly in the inlet psssage so as to vary the disposition of its projecting tongue in the bowl and hence to alter the directional pattern of the inlet air as it enters the associated cylinder past the inlet valve, and the degree of swirl produced in the cylinder.

The operating mechanism may be common to all the movable inserts of all the inlet ports, being operable during the running of the engine to move all the inserts in unison, automatically in response to a change in engine speed or in some other engine operating condition.

The invention further comprises a method of operating such an I.C. engine, comprising automatically adjusting at least one of the movable inserts in response to a change in an engine operating condition.

The invention may be carried into practice in various ways, but certain specific embodiments thereof will now be described by way of example only and with reference to the accompanying drawings, in which

Figure 1 is an elevational view of part of the cylinder head of a multi-cylinder piston engine, in section taken in a plane containing the axis of one poppet valve and lying parallel to the axis of the inlet passage of the associated "helical" inlet port,

Figure 2 is a plan view in section on the line II - II of Figure 1,

Figures 3 and 4 are cross-sections on the lines III - III and IV - IV respectively of Figure 1,

Figures 5, 6, 7 and 8 are views corresponding respectively to Figures 1, 2, 3 and 4 of a second embodiment of the invention in which the insert sleeve is rotated as well as being moved axially by its operating mechanism, and

Figures 9 and 10 are views corresponding respectively to Figures 1 and 2 of a third embodiment of the invention as applied to a "directed" inlet port.

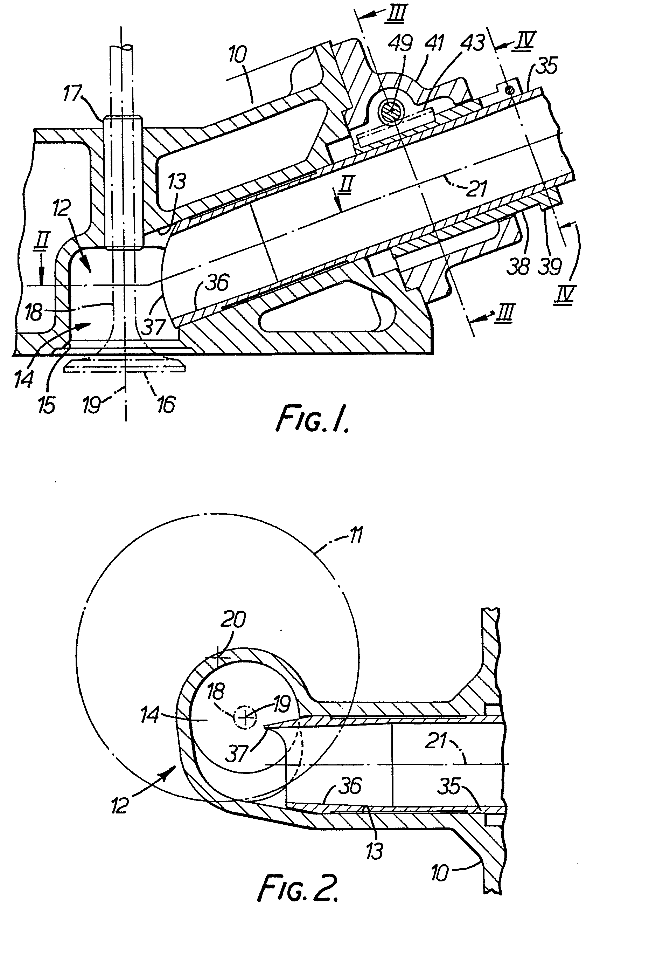

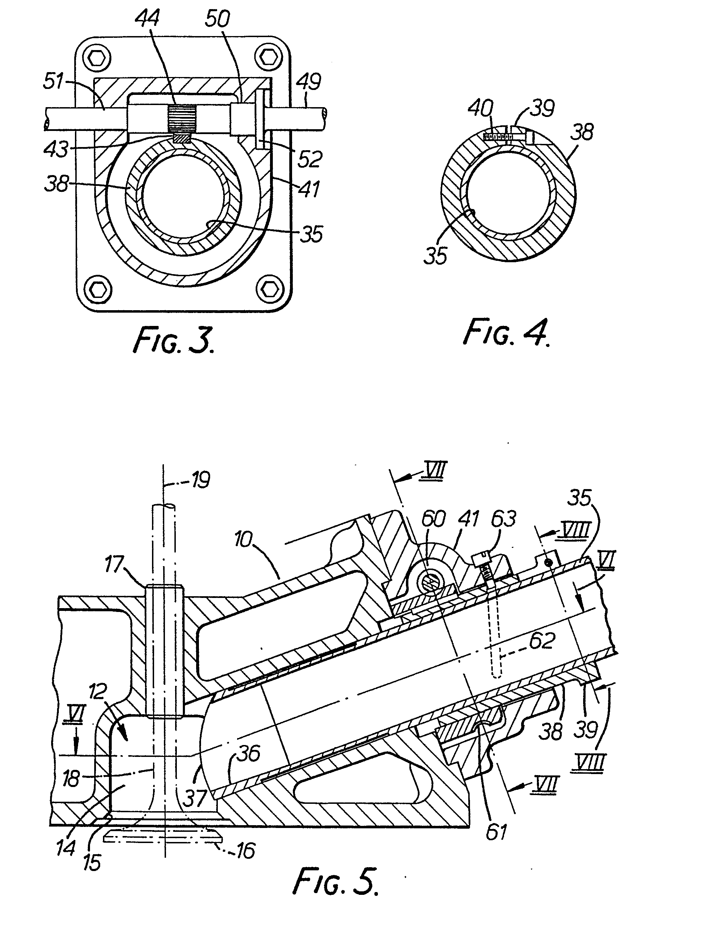

In the embodiment of Figures 1 to 4, a multi-cylinder Diesel engine has a cylinder head 10 part of which is shown in Figure 1, each cylinder (whose bore is shown in chain lines at 11 in Figure 2) having an inlet port 12 of the so-called "helical" type comprising a straight cylindrical inlet passage 13 which extends inwardly from the exterior of the head 10 to intersect at its inner end a cylindrical inverted bowl 14 around whose open lower end the valve seating 15 for the head 16 of the associated poppet valve extends circumferentially. The bowl 14 has either a flat top (as shown), or a hemispherical top containing the end of a valve guide 17 for the valve stem 18, whose axis 19 is coaxial with that of the bowl 14 but is offset from the axis 20 of the cylinder bore 11. The axis 21 of the straight inlet passage 13 is offset from the valve stem and bowl axis 19, on the side thereof remote from the cylinder bore axis 20. Thus the bowl 14 surrounds the valve stem 18 forming an annular vortex chamber into which the inlet air from the passage 13 enters the bowl in a generally tangential direction i.e. with an effective radius of action from the axis 19, setting up a swirl in the bowl, before the swirling air passes the valve and enters the combustion space in the cylinder 11 once again with an effective radius of action from the cylinder axis 20 so that an additional swirl will be imposed on the rotating air stream entering the cylinder from the port.

The straight passage 13 of the inlet port is lined by a slidable tubular insert sleeve 35 which is a close sliding fit in the bore of the passage 13. The liner sleeve 35 which is of circular section has a bore which is cylindrical over the majority of the length of the sleeve apart from its inner end section 36 where the bore is of tapering frusto-conical form. The exterior
of the sleeve 35 is recessed circumferentially to aid
its longitudinal and rotary sliding in the passage
13, and to minimise heat pick-up from the hot coolant
in the head 10. Alternatively the outside of the
sleeve may be unrelieved and the bore of the cast
inlet passage relieved appropriately. The inner end
of the sleeve 35 is formed as a profiled tongue 37 which
protrudes beyond the internal surface of the bowl 14
into the vortex chamber formed by its interior, as
shown clearly in Figures 1 and 2. The shape of the
tongue 37, and the degree of its protrusion into the bowl
which depends upon the axial position of the sleeve 35 in
the passage 13, control the degree of swirl generated
in the bowl 14, and hence control the directional
pattern of the intake air entering the cylinder 11 past
the valve head 16, and the degree of swirl of the air/
fuel mixture in the combustion chamber.

The insert sleeve 35 is adjustably clamped in
an encompassing cuff 38 having a split end flange 39
fitted with a clamping screw 40. The cuff 38 is
enclosed in a fixed housing 41 which is bolted to the
exterior of the cylinder head 10. The cuff 38 carries
an axially-extending rack 43 which cooperates with a
pinion 44 on an elongated operating shaft 49 which is
journalled at 50, 51 in the housing 41 and carries a
location flange 52. Rotation of the shaft 49 causes
the rack and pinion mechanism to move the cuff 38 and
with it the clamped insert sleeve 35 to or fro along
the axis 21 of the sleeve, which slides longitudinally
in the passage 13, thus altering the extent to which
the tongue 37 protrudes into the interior of the bowl 14 and hence varying the degree of swirl generated in the bowl. The inter-engagement of the rack 43 and pinion 44 are relied on to prevent rotation of the cuff 38 and sleeve 35 about their longitudinal axis 21.

The operating shaft 49 is common to all the inlet ports 12 and extends through and is journalled in all their housings 41 so that rotation of the shaft 49 moves the sleeves 35 of all the ports in unison in the same direction and to the same extent. The shaft 49 is coupled to the output of a servo-mechanism (not shown) controlled in response to the speed of the engine by a tachometer device of a known type, so that the shaft is rotated and moves all the insert sleeves 35 longitudinally, in response to changes in engine speed.

The usual inlet air manifold (not shown) is fitted to the cylinder head and has its individual branches for the various cylinders arranged to fit over and enclose the outer ends of the movable sleeves 35 and their housings 38, the branches being bolted up to the cylinder head face or the outer faces of the respective housings 38 to provide the necessary air seals without interfering with the free longitudinal sliding movement of the sleeves 35, whose open outer ends communicate freely with the interiors of their respective manifold branches.

On the initial assembly of the engine, the position of each sleeve 35 is adjusted individually by means of the associated clamping cuff 38 and screw 39 to ensure that each inlet port 12 of the multi-cylinder engine provides an equal degree of swirl under a given engine operating condition. This initial adjustment is done on a swirl-rig bench using the swirl measurement techniques which are described in our aforesaid specification No. 2056553 A. The sleeves 35 are then clamped in their pre-adjusted positions by the cuffs and clamping screws 39. In many cases, careful casting and/or machining of the inlet port tracts and inlet manifold will mean that after development of a prototype engine has determined the required preset positions of the sleeves 35, the sleeves of production engines can be assembled in corresponding predetermined positions without individual initial adjustment involving swirl measurements on the swirl-rig test bench.

When the initial positions of the sliding sleeves of the engine have thus all been determined and set up, the operating mechanism for the shaft 49 is relied on to alter the longitudinal position of the sleeves 35 automatically and in unison in dependence upon changing engine speed, to optimise the swirl generation in the inlet ports of all the cylinders for the prevailing engine speed.

Provided that the slidably-interengaged faces of the sleeve 35 and inlet passage 13 are parallel to permit longitudinal sliding movement of the sleeve, it is of course not necessary that the sleeve and passage be of circular cross-section.

Moreover, with a circular-section sleeve it is possible to provide for swirl control by arranging for circumferentially-sliding rotation of the sleeve 35 in the passage 13 to effect the angular alteration of the position of its tongue 37 in the bowl 14 and thereby to vary the swirl generation. An externally frusto-conical sleeve in a correspondly-tapered passage could be used in such an arrangement.

Again, a combination of longitudinal linear sliding and circumferential sliding, i.e. rotation, of the sleeve in the passage could be employed, such an arrangement requiring parallel interengaged sliding faces of the sleeve and inlet passage which are circular in cross-section.

Any of these different modes of sliding movement could be chosen to suit engine requirements, such as the detailed design of the individual engine and of its inlet manifold which inter-react with accessibility.

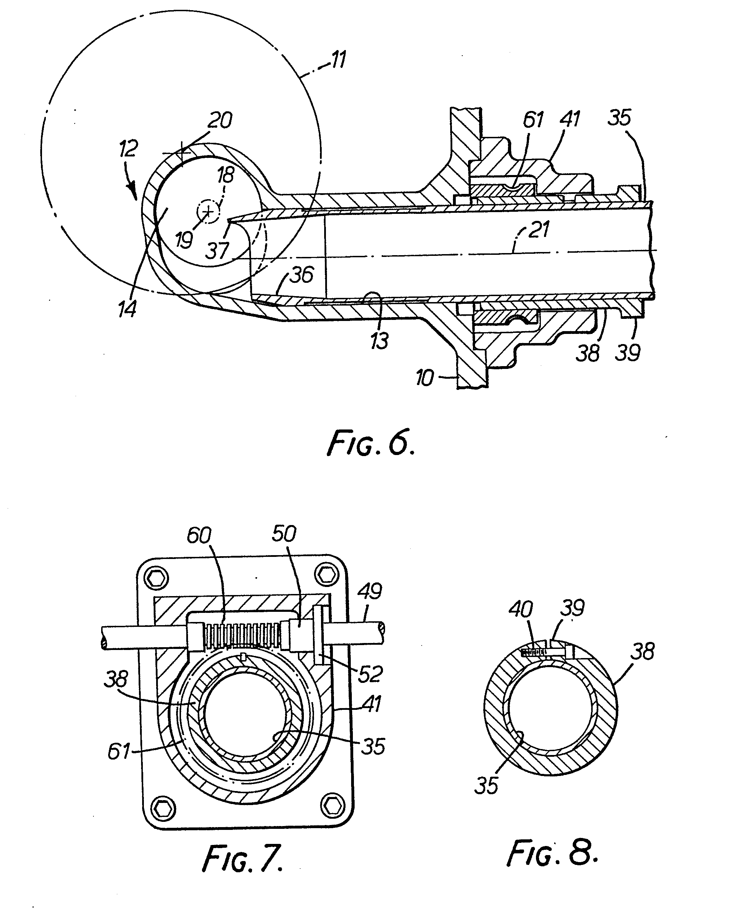

Figures 5 to 8 show a second embodiment of the invention in which parts which correspond to referenced parts in Figures 1 to 4 are given the same reference numerals in those figures, the inlet port 12 again being of "helical" type.

In the embodiment of Figures 5 to 8, the operating mechanism is arranged to move the sleeve 35 with a combination of linear and rotary sliding motion in the inlet passage 13. Thus the control shaft 49 which runs the length of the cylinder head carries a suitable worm screw 60 in the housing 48 of each of the cuffs 38, and the worm 60 engages with a worm wheel 61 keyed to the outer circumference of the cuff 38. Rotation of the shaft 49 by the control servo-mechanism will cause each of the sleeves 35 to be slidingly rotated about its own axis in the associated passage 13. At the same time, a helical groove 62 cut in the exterior surface of the cuff 38 is slidingly engaged by a fixed screw peg 63 secured in the housing 41 so as to provide a camming action by which rotation of the cuff 38 by the worm and wheel mechanism also results in a simultaneous axial sliding movement of the cuff and of the sleeve 35 in the longitudinal direction of the sleeve axis. The relationship between the linear and rotary sliding motion of the sleeve is determined by the helix angle of the groove 62. If this has a zero helix angle then the sleeve will be rotated without axial displacement by the operating mechanism.

The simultaneous sliding motion of all the sleeves 35 in each of these embodiments may be effected to control the degree of swirl generation in response to any chosen engine operating parameter, or combination of parameters, for example engine speed, load, or a combination of speed and load. Many other mechanisms could of course be employed to effect the simultaneous movement of the sleeves for swirl adjustment. Precisely which arrangement is used will depend upon the detail of inlet and exhaust port layout and the associated manifold designs.

Whilst in the illustrated embodiments the sleeves 35 are complete tubular members, it will be apparent that apertured sleeves, or sleevelike inserts of a skeleton structure, or armatures of wire or strip material, could be employed to carry protruding profiled deflector vanes or tongues to effect the swirl control. The only requirement is that the insert structure chosen should slide freely against the internal circumferential surface of the inlet passage 13 in the axial and/or circumferential mode, should be stiff enough to support and move the tongue or vane firmly and positively without flexing, and should interfere as little as possible with the intake air flow through the passage 13. The movable inserts may be made in any suitable material, e.g. metallic, plastics, composite or even ceramic material.

The invention is applicable equally to inlet ports of the "directed" type, such as are described in our aforesaid specification No. 2056553A, in which the axis of the inlet passage intersects that of the bowl of the inlet port in a symmetrical disposition with the passage axis inclined downwardly with respect to the interface between the cylinder head and the cylinder block. Any of the arrangements for effecting sliding movement of the insert sleeve described above with reference to Figures 1 to 7 in relation to "helical" inlet ports can be directly employed without significant modification for "directed" ports.

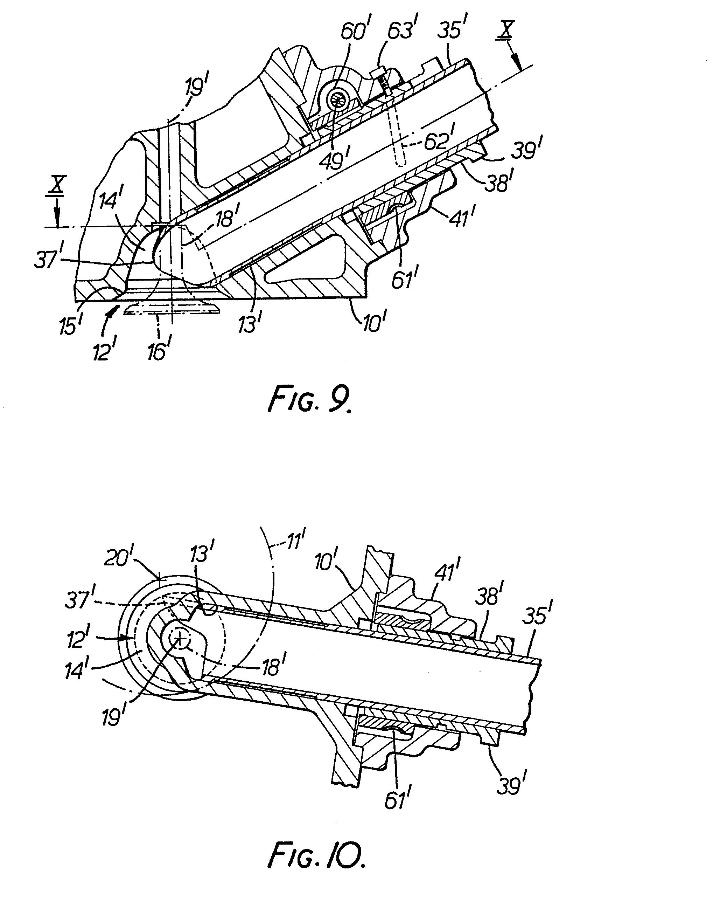

Figures 9 and 10 show an embodiment of the invention as applied to an engine with inlet ports of the "directed" type. One cylinder bore 11' of the engine is shown in chain lines in Figure 10, with its axis indicated at 20', and as shown the straight inlet passage 13' of the port 12' has its axis 21' intersecting the axis 19' of the bowl 14' of the port and of the valve stem 18', in a symmetrical disposition as viewed in plan in Figure 10.

In this embodiment, the insert sleeve 35' is of uniform internal cross-section over the whole of its length but apart from this and from the shape and disposition of the inlet port 12' the arrangement is similar to that of the embodiment of Figures 5 to 8, and the same reference numerals are used to identify similar parts but distinguished in the present embodiment by a stroke. The sleeve 35' is moved rotationally by its worm and wheel mechanism 60', 61' and is adjusted axially by the screw peg 63' and camming groove 62' just as in the preceding embodiment, such rotary and linear adjustment being effected by the associated operating mechanism which rotates the shaft 49' in response to variations in the engine operating conditions.

CLAIMS

1. An I.C. engine of the reciprocating-piston type, the or each cylinder of which has one or more inlet ports of either "helical" or. "directed" type as hereinbefore defined, the or each inlet port being provided with an inlet valve of poppet type, there being a movably-mounted insert provided in the inlet passage of the or each inlet port, the insert having a deflector vane or tongue portion at its inner end which, in use, protrudes into the bowl of the port, characterised in that the insert (35, 36) is in sliding contact with the interior wall of the inlet passage (13) for longitudinal and/or circumferential sliding movement relative thereto, and that the engine has means (49, 44, 43;  49, 60, 61; 63, 62) for moving the insert (35, 36) during the running of the engine so as to adjust the dispostion of its protruding vane or tongue (37) in the bowl (14) of the port (12) and hence to control the degree of swirl produced by that port (12) in the associated cylinder.

2. An I.C. engine of the reciprocating-piston type, the or each cylinder of which has one or more inlet ports of either "helical" or "directed" type as hereinbefore defined, the or each inlet port being provided with an inlet valve of poppet type, there being a movable insert in the form of a liner sleeve mounted in the inlet passage of the or each inlet port which has at its inner end a tongue portion which is adapted to project inwardly into the bowl of the port, characterised in that the sleeve (35, 36) is in slidable engagement with the internal wall of the passage (13) for sliding movement either linearly along the length of the passage (13) or angularly around the internal circumference of the passage (13) or with a combination of said linear and angular sliding movements, and that the engine also has means (49, 44, 43; 49, 60, 61; 63, 62) operable during the running of the engine to move the sleeve (35, 36) of the or each inlet port (12) linearly and/or angularly in the inlet passage (13) so as to vary the disposition of its projecting tongue (37) in the bowl (14) and hence to alter the directional pattern of the inlet air as it enters the associated cylinder past the inlet valve (15, 16), and the degree of swirl produced in the engine.

3. An engine as claimed in Claim 1 or Claim 2 which has a multiplicity of inlet ports each with an insert sleeve, characterised in that a part (49) of the means for moving the inserts (35, 36) is common to all the movable inserts (35, 36) and operates automatically to move all the inserts (35, 36) in unison in response to a change in an engine operating condition.

4. An engine as claimed in Claim 1 or Claim 2 or Claim 3, characterised in that the means (49, 44, 43; 49, 60, 61; 63, 62) for moving the or each insert includes a rotatable shaft (49) coupled to the or each insert (35, 36) by a transmission mechanism (44, 43; 62, 63) which transforms rotation of the shaft (49) into linear movement of the insert (35, 36) along the inlet passage (13).

5. An engine as claimed in Claim 4, characterised in that the transmission mechanism is a rack-and-pinion mechanism (44, 43).

6. An engine as claimed in Claim 1 or Claim 2 or Claim 3, characterised in that the means for moving the or each insert (35, 36) includes a rotatable shaft (49) coupled to the or each insert (35, 36) by a transmission mechanism (60, 61) which transforms rotation of the shaft (49) into rotation of the insert (35, 36) around the longitudinal axis of the inlet passage (13).

7. An engine as claimed in Claim 6, characterised by a cam (63) and follower (62) coupling between the or each insert (35, 36) and the fixed structure of the cylinder head (10) whereby the rotation of the insert (35, 36) in the inlet passage (13) automatically causes corresponding linear movement of the insert (35, 36) along the passage (13).

8. An engine as claimed in any one of the preceding claims, characterised by means for automatically effecting the adjustment of the disposition of the or each insert (35, 36) in its associated inlet passage during the running of the engine in response to variations in one or more engine operating parameters, e.g. engine speed and/or load.

9.   A method of operating an I.C. engine as claimed in any one of the preceding claims, characterised by automatically adjusting the position of at least one of the movable inserts (35, 36) in response to a change in an engine operating parameter.

FIG. 1.

FIG. 2.

0074202

2/4

FIG. 3.

FIG. 4.

FIG. 5.

FIG. 6.

FIG. 7.

FIG. 8.

FIG. 9.

FIG. 10.